# EUROPEAN PATENT SPECIFICATION

(11) **EP 2 721 442 B1**
(45) Date of publication and mention of the grant of the patent: **08.01.2020**
(21) Application number: 12728067.5
(22) Date of filing: 14.06.2012
(51) Int. Cl.: G02B 21/16, G02B 21/36, G01N 21/64

(54) **METHOD AND APPARATUS FOR IMAGING A STRUCTURE MARKED WITH A FLUORESCENT DYE**
VERFAHREN UND VORRICHTUNG ZUR ABBILDUNG EINER MIT EINEM FLUORESZIERENDEN FARBSTOFF MARKIERTEN STRUKTUR
PROCÉDÉ ET APPAREIL PERMETTANT D'IMAGER UNE STRUCTURE MARQUÉE AVEC UN COLORANT FLUORESCENT

(30) Priority: 15.06.2011 DE 102011051086; 19.09.2011 DE 102011053739
(43) Date of publication of application: 23.04.2014
(73) Proprietor: Max-Planck-Gesellschaft zur Förderung der Wissenschaften e.V., 80539 München (DE); Deutsches Krebsforschungszentrum, 69120 Heidelberg (DE)
(72) Inventor: HELL, Stefan W., 37085 Göttingen (DE); SCHNEIDER, Jale, 4056 Basel (DE); ENGELHARDT, Johann, 76669 Bad Schönborn (DE)
(74) Representative: REHBERG HÜPPE + PARTNER
(86) International application number: PCT/EP2012/061292
(87) International publication number: WO 2012/171999

(56) References cited:
- US-A1- 2005 024 637
- US-A1- 2007 291 353
- US-A1- 2011 081 653
- Gael Moneron ET AL: "Fast STED microscopy?with continuous wave fiber lasers", Optics Express, vol. 18, no. 2, 12 January 2010 (2010-01-12), pages 1302-1309, XP055002828, ISSN: 1094-4087, DOI: 10.1364/OE.18.001302

## Description

### FIELD

The present invention relates to a method of imaging a structure marked with a fluorescent dye and to an apparatus for performing such a method. More particular, the present invention relates to a method of imaging a structure marked with a fluorescent dye in a sample, wherein the sample, in a scanning range, is repeatedly scanned with a light intensity distribution localised around a focal point of a focused fluorescence excitation light beam of fluorescence excitation light, wherein the light intensity distribution further includes a fluorescence inhibiting light beam of fluorescence inhibiting light whose wave fronts are modulated such that a fluorescence inhibiting light intensity distribution comprises a minimum at the focal point of the fluorescence excitation light beam, and wherein fluorescence light emitted out of the scanning range is detected and allocated to the actual location of the focal point.

With regard to the apparatus, the invention particularly relates to an apparatus for executing the method according to any of the preceding claims, which comprises a fluorescence excitation light source for providing a fluorescence excitation light beam of fluorescence excitation light; a fluorescence inhibiting light source for providing a fluorescence inhibiting light beam of fluorescence inhibiting light whose wave fronts are modulated; an objective lens focusing the fluorescence excitation light beam and the fluorescence inhibiting light beam; a raster scanner for repeatedly scanning a scanning range with a light intensity distribution which is localised around a focal point of the focused fluorescence excitation light beam and which further comprises a fluorescence inhibiting light intensity distribution comprising a minimum at the focal point of the fluorescence excitation light beam; a detector detecting fluorescence light emitted out of the scanning range; and an evaluation unit allocating the fluorescence light to the actual location of the focal point in the sample.

The invention thus concerns the field of raster fluorescence light microscopy. Particularly, the present invention concerns high resolution raster fluorescence light microscopy in which measures are taken which allow for allocating fluorescence light emitted out of a scanning range of a sample to a location in the sample at higher spatial resolution than the diffraction barrier at the wavelength of the fluorescence excitation light. This location in the sample which is in fact an area around the focal point of the focused fluorescence excitation light beam comprising the dimensions of the spatial resolution achieved, will also be designated as "measurement area", here. The term "focal point of the focused fluorescence excitation light beam" refers to the geometric focal point, here.

Typical measures taken for increasing the spatial resolution beyond the diffraction barrier involve scanning the sample with a light intensity distribution which extends over a larger volume than the spatial resolution in allocating the fluorescence light to the respective location in the sample. As a result, a particular area of the sample has already been subjected to considerable light intensities in scanning the sample with the light intensity distribution before it is reached by the measurement area.

In high resolution scanning fluorescence light microscopy, in which, besides the fluorescence excitation light beam of fluorescence excitation light, a further light beam of fluorescence inhibiting light, such as a stimulation light beam in STED scanning fluorescence light microscopy, is used, the light intensities preceding the actual measurement area may have undesired results like for example an already extensive bleaching of the fluorescent dye. This particularly applies, if the spatial resolution is maximised by high light intensities of the additional light beam. Sensitive fluorescent dyes are thus unsuited for the methods of high resolution scanning fluorescence light microscopy known up to now as they are already subjected to such high light intensities of the fluorescence excitation light beam and a stimulation light beam that they are completely bleached prior to being reached by the measurement area.

### BACKGROUND OF THE INVENTION

WO 2010/069987 A1 discloses a method and an apparatus for imaging a structure marked with a fluorescent dye in a sample and relates to the design of a raster scanner. The raster scanner dynamically adjusts the combined fluorescence excitation and stimulation light beams with regard to the pupil of a common focusing optic such that a zero point of the light intensity distribution of the stimulation light at the focal point of the fluorescence excitation light is maintained over the entire scanning range.

DE 10 2005 027 896 A1 discloses a method and an apparatus for imaging a structure marked with a fluorescent dye in a sample in which same areas of the sample are only subjected to the light intensity distribution at an optimised temporal repetition interval. This is achieved by providing the light intensity distribution in pulses of comparatively long temporal intervals and/or by comparatively fast scanning the sample with the light intensity distribution. In this way, the intensity of the fluorescence light obtained from the sample is increased as the rate at which the respective fluorescent dye due to further excitation gets out of an excited intermediate state into a permanent or only slowly decaying dark state is strongly reduced. In other words, with a comparatively long repetition interval of subjecting each individual area of the sample to the light intensity distribution, the amount of fluorescence light obtainable from the sample during a certain interval of time is maximised. Particularly, a repetition frequency of a pulsed light intensity distribution is reduced from 80 MHz to 50 kHz. This known method also reduces a tendency of the fluorescent dye to bleach upon the influence of the light intensity distribution, as a higher population of an excited state out of which a photochemical destruction of the fluorescent dye may occur is avoided. Photochemically bleaching of the fluorescent dye, however, is not the basic problem of DE 10 2005 027 896 A1.

If, according to DE 10 2005 027 896 A1, the scanning speed at which the respective sample is scanned is increased, the photons from the sample are preferably registered by a one- or two-dimensional light sensor array onto which at least a part of the sample is imaged without variation in time. The focal point of the fluorescence excitation light which is shifted with regard to the sample upon scanning the sample is thus consecutively imaged onto other light sensors, the same light sensor always registering photons out of the same area of the sample. Thus, no problem with regard to separating photons out of different areas of the sample is associated with the fast scanning of the sample. The light sensor array may be a camera, particularly an electronic camera, like for example a CCD or CMOS camera. So far as photons are mentioned in this context in DE 10 2005 027 896 A1, no reference is made to that individual photons but light intensities of the fluorescence light coming from the sample are detected with the light sensor array.

In the praxis of STED scanning fluorescence light microscopy it does not prove as being trivial to find a scanning speed which is advantageous for a certain sample and a fluorescent dye contained in the sample. Thus, in practice, often only a very low yield of fluorescence light is obtained from the sample.

From the Handbook of Biological Confocal Microscopy, a confocal microscope designated as Bio-Rad MRC-500 is known in which a structure marked with a fluorescent dye in a sample is imaged in that at a low excitation for fluorescence the signal of a photomultiplier is correlated to a certain number of photons at the respective image point and that in this way dark noise is filtered of the signal, and in that the numbers of photons registered for the same image point are added over several frames to achieve an enhanced signal-to-noise ratio as compared to simply integrating the signal from the photomultiplier over the same interval of time.

WO 2011/015832 A1 describes a far field scanning microscope, particularly a multi photon laser scanning microscope. The known microscope comprises a laser source for generating an excitation beam, self-focusing means for causing self-focusing of the excitation beam, thereby to reduce its lateral size, means for scanning the excitation beam of reduced size relative to a sample area, and means for forming an image of the sample using light reflected or transmitted through the sample. Self-focusing is a non-linear optical effect, whereby a propagating light source self-focuses in a transparent medium. This is caused by the beam, via the Kerr nonlinear optical effect, interacting with a material with a positive value non-zero order, typically second order, refractive index component.

WO 2010/082048 A2 discloses fluorescence microscopy methods and apparatus concerning the control of photobleaching of fluorescence labels during the study of samples by fluorescence microscopy. The idea here is to control the excitation for fluorescence such as to maximise the emission and therefore the information provided by a given type of fluorescence label, whilst reducing or minimising the rate at which the label is photo-bleached. This shall be achieved by setting the parameters of the excitation procedure or regime (such as excitation pulse duration, power level, and pulse repetition rate) so that they increase and maximise the total photon emission. The procedure is determined with a view to increasing the overall emission rate at which the fluorescence labels can relax from their excited state to their ground state for a given experiment and given experimental conditions, whilst reducing the rate at which the fluorescence labels can move from the dark (or triplet) state to the bleached state. The specific characteristics of the fluorescence labels present in the sample are taken into account in devising the experimental procedure.

US 2011/081653 A1 discloses a method for high spatial resolution imaging of a structure of interest in a specimen by imaging the specimen onto a sensor array. The specimen is exposed to light of one wavelength such that molecules of a substance by which the specimen's structure of interest has been marked that are in a fluorescent electronic state lie at a distance from their closest neighbouring molecules in the fluorescent molecule state which is greater than the spatial resolution limit of the imaging of the specimen onto the sensor array. The fluorescent light which is spontaneously emitted by the molecules is registered in a plurality of images recorded by the sensor array during continuous exposure of the specimen to the light of the one wavelength. The positions in the specimen of the molecules of the substance are determined from the images recorded by the sensor array. This known method can be combined with measures for spatial resolution of the registered positions of the molecules in the specimen in the z-direction. These measures include multi-photon excitation of the fluorescent dye by focusing the exciting light of the one wavelength onto the respective plane of interest. In case the light is focused only into one or more individual points of the plane, the plane is to be scanned with these points during all steps of the method, for example during the recording of each individual image. Further, a photodetector may additionally be provided onto which a region of the specimen that corresponds to a plurality of pixels of the sensor array is imaged in order to observe the chronological sequence of the emission of individual photons from this region. With such a photodetector it is possible to establish very rapidly, whether the intensity of the measurement signal of only one or more molecules of the substance is registered in the respective region, for example to determinate the registering in favour of a new attempt if it is not found that the intensity comes from only a single molecule.

US 2007/0291353 A1 discloses a super-resolution microscope in which a sample is scanned with pump light and erase light and wherein fluorescence light from the sample is detected. Fluorescence is inhibited at all the spots except the proximity of the optical axis where the intensity of the erase light becomes zero. As a result, there are observed only fluorescence label molecules existing in an area which is smaller than the dispersion of the pump light. Therefore, by measuring the fluorescence signal while scanning the pump light and the erase light, it is possible to obtain a two-dimensional fluorescent image with a super-resolution.

US 2005/0024637 A1 discloses a detector for detecting weak fluorescent radiation in a confocal scanning fluorescence light microscope. The detector senses individual photons coming from a scan sample.

Gael Moneron et al.: "Fast STED microscopy with continuous wave fiber lasers", OPTICS EXPRESS, Vol. 18, No. 2, 12 January 2010 (2010-01-12), pages 1302-1309 disclose fast beam-scanning stimulated-emission-depletion (STED) microscopy using continuous wave (CW) fiber lasers. The combination of CW-STED and fast beam-scanning is illustrated in a movie of the endoplasmic reticulum (ER) of a living cell, composed of 100 frames each of them acquired in a shorter time than 0.2 s. In order to enable high count-rates required for fast acquisition speeds, a photomultiplier with a large dynamic range and a high quantum efficiency was used for confocal fluorescence detection. Photon counting and data pre-processing were accomplished with a custom field programmable gate array (FPGA). Confocal and STED images of 20 nm yellow-green fluorescent particles mounted on a cover glass were compared. Particularly, normalized intensity profiles of averaged images over more than 10 single bead images taken from confocal and from STED pictures showed full-widths-at-half-maximum of 190 nm and 40 nm, respectively. The pixel dwell-times reported by Gael Moneron et al. were 2.85 µs at a pixel size of 10 nm, 2 and 5 µs at a pixel size of 15 nm and 0.94 µs at a pixel size of 25 nm.

### PROBLEM OF THE INVENTION

It is the problem of the present invention to provide a method and an apparatus for imaging a structure marked with a fluorescent dye in a sample which allow for performing high resolution scanning fluorescence light microscopy even with fluorescent dyes highly susceptible to bleaching.

### SOLUTION

The problem of the invention is solved by a method and an apparatus according to the independent claims 1 and 8.

### SUMMARY OF THE INVENTION

The present invention relates to a method of imaging a structure marked with a fluorescent dye in a sample. The method comprises the steps of repeatedly scanning the sample in a scanning range with a light intensity distribution localised around a focal point of a focused fluorescence excitation light beam of fluorescence excitation light, wherein the light intensity distribution further comprises a focused fluorescence inhibiting light beam of fluorescence inhibiting light whose wave fronts are modulated such that a fluorescence inhibiting light intensity distribution comprises a minimum at the focal point of the fluorescence excitation light beam; detecting fluorescence light emitted out of the scanning range; and allocating the detected fluorescence light to the actual location of the focal point in the sample. While performing these steps, scanning conditions which, besides a scanning speed at which the focal point is shifted with regard to the sample and light intensities of the light intensity distribution, include properties and a concentration of the fluorescent dye in the scanning range are coordinated in such a way that the fluorescence light is emitted out of the scanning range as individually detectable photons. An image of the structure is composed of locations which have been allocated to the detected photons during several repetitions of scanning the scanning range.

The present invention also relates to an apparatus for executing the method of the present invention. The apparatus comprises a fluorescence excitation light source configured to provide a fluorescence excitation light beam of fluorescence excitation light; a fluorescence inhibiting light source configured to provide a fluorescence inhibiting light beam of fluorescence inhibiting light whose wave fronts are modulated; an objective lens configured to focus the fluorescence excitation light beam and the fluorescence inhibiting light beam; a raster scanner configured to repeatedly scan a scanning range with a light intensity distribution which is localised around a focal point of the focused fluorescence excitation light beam and which further comprises a fluorescence inhibiting light intensity distribution comprising a minimum at the focal point of the fluorescence excitation light beam; a detector configured to detect fluorescence light emitted out of the scanning range; and an evaluation unit configured to allocate the fluorescence light to the actual location of the focal point in the sample. The apparatus further comprises a controller configured to coordinate scanning conditions which, besides a scanning speed at which the focal point is shifted with regard to the sample and light intensities of the light intensity distribution, include properties and a concentration of the fluorescent dye in the scanning range such that the fluorescence light is emitted out of the scanning range as individually detectable photons; and the evaluation unit is configured to compose an image of the structure of locations which have been allocated to the detected photons during several repetitions of scanning the scanning range.

Other features and advantages of the present invention will become apparent to one with skill in the art upon examination of the following drawings and the detailed description. It is intended that all such additional features and advantages be included herein within the scope of the present invention, as defined by the claims.

### SHORT DESCRIPTION OF THE DRAWINGS

The invention can be better understood with reference to the following drawings. The components in the drawings are not necessarily to scale, emphasis instead being placed upon clearly illustrating the principles of the present invention. In the drawings, like reference numerals designate corresponding parts throughout the several views.
**Fig. 1** shows the build-up of a STED scanning fluorescence light microscope as an embodiment of the apparatus of the present invention.
**Fig. 2** shows one scanning of a scanning range with a focal point of an fluorescence excitation light beam in the STED scanning fluorescence light microscope according to Fig. 1; and
**Fig. 3** shows an image of a structure in a sample which has been generated from the locations in the sample to which the individually detected photons of fluorescence light out of the scanning range have been allocated after repeatedly scanning the sample according to Fig. 2.

### DETAILED DESCRIPTION

In the method of the present invention, the effective imaging speed at which images of the structure of interest are generated is much smaller than the rate at which the scanning range is scanned. During each scanning of the scanning range with the light intensity distribution localised around the focal point of the focused fluorescence excitation light beam, typically only few photons are detected and individually allocated to the respective location of the focal point in the sample. An image of the structure of interest only develops from a higher number of such allocations over several repetitions of scanning the scanning range and progressively becomes complete.

In that each detected photon is taken into account in the method of the present invention, every molecule of the fluorescent dye by which the structure of interest is marked is considered in the image of the structure of interest as soon as it only emits a single photon which is detected afterwards. For this reason alone, the method of the present invention is also suitable for highly sensitive fluorescent dyes, i.e. for fluorescent dyes highly susceptible to bleaching. Additionally, the excitation of the fluorescent dye for emission of fluorescence light at a level of just a few photons during each scanning of the scanning range means that the fluorescent dye in the entire scanning range is only bleached at a very low probability during each repetition of scanning the scanning range. This relation always applies as the probability of bleaching is positively correlated with the probability of the excitation for emission of fluorescence light, independently on how the individual relation looks like.

This particularly means that the measurement area which lies within the localised light intensity distribution around the focal point of the focused excitation light beam with which the scanning range is scanned reaches every point of the scanning range prior to that and even a high sensitive fluorescent dye, i.e. a fluorescent dye highly susceptible to bleaching, is bleached at a relevant proportion. This applies although the light intensity distribution - besides the fluorescence excitation light beam - includes a further fluorescence inhibiting light beam used for increasing the spatial resolution, such as a stimulation light beam in STED scanning fluorescence light microscopy, whose intensity distribution has a minimum or even a zero point at the focal point of the fluorescence excitation light beam but displays a very high intensity in the surroundings of the focal point of the fluorescence excitation light beam.

The bleaching effect of such a fluorescence inhibiting light beam is typically based on its interaction with the fluorescence excitation light beam. When the scanning conditions in the method of the invention are selected such that only individual, separately detectable photons are emitted out of the scanning range, this is tantamount to that this interaction only reaches a low level and thus only results into bleaching of the fluorescent dye at a very low probability.

The scanning conditions by which it is achieved that the fluorescence light is emitted as individually detectable photons out of the scanning range during scanning - in addition to the scanning speed at which the focal point is shifted with regard to the sample and the light intensities of the light intensity distribution - particularly include the characteristics and the concentration of the fluorescent dye in the scanning range. For coordinating the scanning conditions to the respective fluorescent dye and the respective sample, the light intensity of the focused fluorescence excitation light beam may be reduced, as already mentioned. This reduction may effectively also be realised by high frequently modulating the light intensity of the focused fluorescence excitation light beam.

Independently on how the scanning conditions are coordinated to keep the criterion of the present invention of individually registrable photons of the fluorescence light emitted out of the scanning range, it is achieved that the stress to the fluorescent dye in the sample during each scanning of the scanning range is kept so small that the probability of bleaching a certain molecule of the fluorescent dye in the sample prior to getting into the measurement area around the focal point of the fluorescence excitation light beam during scanning is only small. The probability that this molecule is excited in the measurement area for emission of a photon by fluorescence which is also detected is also not very high at the scanning conditions of the present invention. This probability, however, is much higher than in that case that said molecule of the fluorescent dye has already been bleached by the light intensities preceding the measurement area at a very high probability, prior to getting into the measurement area for the first time.

In the method of the present invention, the probability of registering fluorescence light from any molecule of the fluorescent dye in the scanning range may be increased by up to about 25 % even if compared to common methods of STED scanning fluorescence light microscopy with a scanning speed optimally adjusted to the fluorescent dye. In the practice of the method of the present invention, it proves to be much easier to keep the criterion of the individually registrable photons of the fluorescence light emitted out of the scanning range than to optimise a scanning speed for a fluorescent dye in common methods of STED scanning fluorescence light microscopy. Further, keeping the criterion of the present invention can be automated much easier than finding an optimum scanning speed with regard to the yield of fluorescence light in common STED scanning fluorescence light microscopy. Thus, the yield of fluorescence light from the fluorescent dye in the entire scanning range maximised by the method of the present invention is virtually always available and is thus frequently higher by much more than 25 % as compared to the yield of fluorescence light which is practically obtained in common STED scanning fluorescence light microscopy.

If, in the method of the present invention, the scanning speed is increased for adjusting the scanning conditions, the desired effect of the reduced stress to the fluorescent dye in the sample during each scanning of the scanning range is achieved without stretching the time for completely performing the method until sufficient photons for an image of the structure of interest in the sample are registered for a long time. It is no relevant feature of the method of the invention to only excite the emission of few photons during a certain interval of time but to only excite the emission of few photons during each repetition of scanning the scanning range. Thus, the yield of photons from the sample may be increased in the method of the invention without increasing the bleaching of the fluorescent dye in that the scanning speed and thus the frequency at which the scanning range is scanned is increased.

In the method of the present invention, the spatial distributions even of fluorescent dyes which are highly susceptible to bleaching can be registered with high resolution scanning fluorescence light microscopy, particularly with STED scanning fluorescence light microscopy.

In adjusting the scanning conditions the scanning speed may actually be set so high that a pixel dwell time of not more than 10 ns, preferably not more than 7 ns and most preferably about 6 ns is achieved. The pixel dwell time is that interval of time within which the geometric focal point covers a distance which corresponds to the resolution of the respective scanning fluorescence light microscopy procedure. In STED scanning fluorescence light microscopy, the spatial resolution typically is about 20 nm. Correspondingly, the scanning speed is then preferably about 3 nm/ns, i.e. 3 m/s or about 10 km/h.

Due to the small number of photons which are detected during each scanning of the scanning range and allocated to individual locations in the sample in the method of the invention, the locations allocated to the individual photons during at least 3, preferably at least 20, more preferably at least 100 and most preferably at least 1000 succeeding repetitions of scanning the scanning range are combined into an image of the structure of interest.

The locations in the sample which have been allocated to the individual photons during a longer measuring period may also be used to generate a movie, i.e. a series of temporarily succeeding images of the sample, in that a plurality of temporarily succeeding images of the structure are combined from the locations which have been allocated to individual photons during a plurality of succeeding repetitions of scanning the scanning range. This combination takes place in an evaluation stage of the method of the present invention. I.e., without any loss of information, it may be tested how many repetitions of scanning the scanning range have to be combined to provide one image at a desired information density.

It is appreciated that in the method of the invention any method details which are generally known from scanning fluorescence light microscopy to be advantageous may be applied. These method details, for example, include concentrating the scanning range to such areas of the sample in which the structure of interest is located. They also include that scanning the scanning range is performed in a precisely defined pattern at an as constant scanning speed and at an as constant line feed as possible. A defined scanning pattern is for example a precondition for determining the location of the focal point of the fluorescence excitation light beam in the sample which is allocated to an individual photon of the fluorescence light emitted out of the scanning range, only from the point in time of the detection of the photon. With a constant scanning speed and a constant line feed, the coordinates of the location of the focal point in the sample may for example be derived from the count readings of two counters, one of which counting along each line and the other of which counting the line feeds.

In the apparatus of the present invention, the fluorescence excitation light source and the fluorescence inhibiting light source which, in an STED scanning fluorescence light microscope, is a stimulation light source may each comprise a continuous wave laser but also a laser pulsed or modulated at a high frequency. The raster scanner typically comprises an electro-optical deflector at least for fast scanning along each line. The line feed may be realised by a comparatively slower scanner, like for example a scanner based on a galvanometer.

The detector of the new apparatus is preferably a point detector which may be arranged confocally with regard to the focal point of the fluorescence excitation light beam. Particularly preferred, it is a so-called hybrid detector which comprises several detector units to be able to individually detect succeeding photons at a high precision in time, even if the absolute temporal rate of the photons is high.

Further preferred details of the apparatus of the invention have already been explained when explaining the method of the invention.

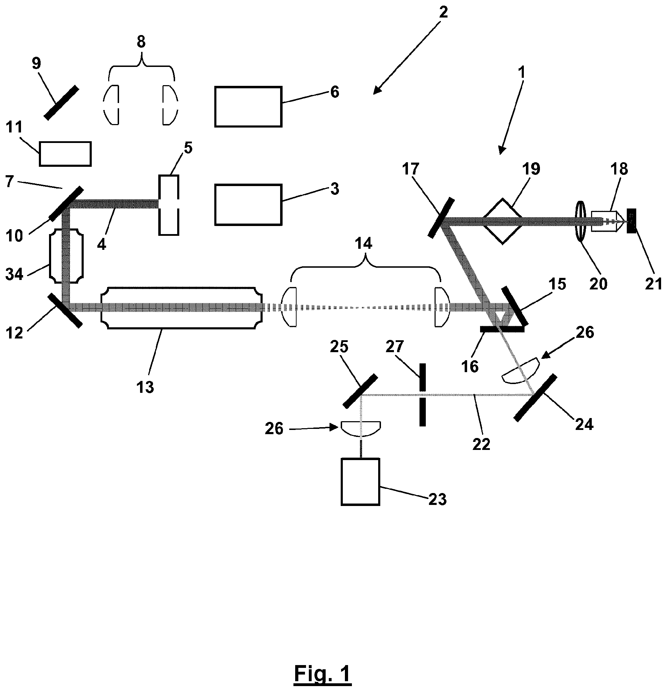

Referring now in greater detail to the drawings, **Fig. 1** shows a STED scanning fluorescence light microscope 2 as an example of an apparatus 1 of the present invention. The apparatus 1 comprises an fluorescence excitation light source 3 comprising a laser and providing an fluorescence excitation light beam 4. The wavelength of the fluorescence excitation light beam 4 is selected by an acousto-optically adjustable filter 5 to be able to later chromatically separate the fluorescence excitation light from fluorescence light which is emitted upon excitation by the fluorescence excitation light. Besides the fluorescence excitation light source 3, there is a stimulation light source 6 which provides a stimulation light beam 7. The stimulation light beam 7 is formed by an optic 8, deflected towards a dichroic beam splitter 10 by a mirror 9 and its wave fronts are modulated by means of a wave front modulator 11 prior to reaching the dichroic beam splitter 10. By means of the dichroic beam splitter 10 the fluorescence excitation light beam 4 and the stimulation light beam 7 are merged on one optical axis. Along the optical axis they first pass through an electro-optical modulator 34, before they are deflected by a mirror 12 and pass through an electro-optical deflector 13. An optic 14 for beam shaping, a deflection arrangement made of a mirror 15 and a further mirror 16 also serving as a bandpass filter follow. Afterwards, a further mirror 17 deflects the light beams into an objective lens 18 in front of which a galvanometer 19 and, as an alternative to the wave front modulator 11, a phase plate 20 are arranged. The objective lens 18 focuses the two light beams 4, 7 into a common focal point in a sample 21. The fluorescence excitation light of the fluorescence excitation light beam 4 has its maximum intensity in this focal point, whereas the stimulation light of the stimulation light beam 7, due to its modulated wave fronts, has a minimum or zero point here. As the stimulation light of the stimulation light beam 7 has a fluorescence inhibiting effect, fluorescence light excited by the fluorescence excitation light of the fluorescence excitation light beam 4 may practically only stem from the area directly around the focal point of the fluorescence excitation light beam 4 and thus out of a smaller area than a diffraction-limited spot of the fluorescence excitation light. The fluorescence light 22 from the sample 21 is registered by a detector 23 which is arranged behind the mirror 16, the bandpass filter of the mirror 16 being tuned to the wavelength of the fluorescence light 22. Two mirrors 24 and 25, a two-part optic 26 and a slit diaphragm 27 are provided in the beam path of the isolated fluorescence light 22. Due to the slit diaphragm27, the arrangement of the detector 23 is confocal with regard to the focal point of the fluorescence excitation light beam 4 in the sample 21 in one direction. The separated fluorescence light 22, however, is not completely de-scanned at the mirror 16 as the shifts of the light beams 4 and 7 by means of the electro-optical deflector 13 have not yet been reversed. This electro-optical deflector 13 serves for quickly line-wise scanning or rasterising the scanning range in the sample 21 with the focal point of the fluorescence excitation light beam 4. On the other hand, the galvanometer 19 is provided for a somewhat slower line feed between the individual lines in scanning the scanning range. The electro-optical modulator 34 can be used to, for example, provide for a line reset in scanning without subjecting the sample to fluorescence excitation light and stimulation light.

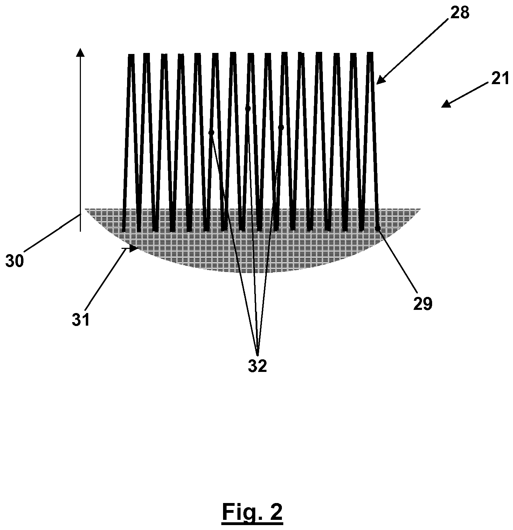

**Fig. 2** illustrates a scanning range 28 which is scanned with the focal point 29 of the fluorescence excitation light beam 4 according to Fig. 1. Here, the line direction 30 in which a quick scanning occurs is depicted vertically and the line feed direction 31 is depicted horizontally. For example, each line may be 6 µm long and may be scanned within 2 µs. The spatial resolution in STED scanning fluorescence light microscopy typically is about 20 nm. This means that each line comprises about 300 resolvable pixels each of which being passed through by the focal point 29 within less than 7 ns. In the line feed direction 21, the line feed between two neighbouring lines is in the order of the spatial resolution of 20 nm (Fig. 2 is not at the same scale in line direction 30 and in line feed direction 31). Photons individually detected by means of the detector 23 according to Fig. 1 during scanning the scanning range 28 with the focal point 29 are allocated to locations 32 at which the focal point 29 was when the respective photons were emitted and detected. From the information obtained in this way over several repetitions of scanning the scanning range 28 an image is composed which represents the distribution of the fluorescence light from the sample and which is thus a depiction of a structure which is marked with a fluorescent dye emitting this fluorescence light in the sample.

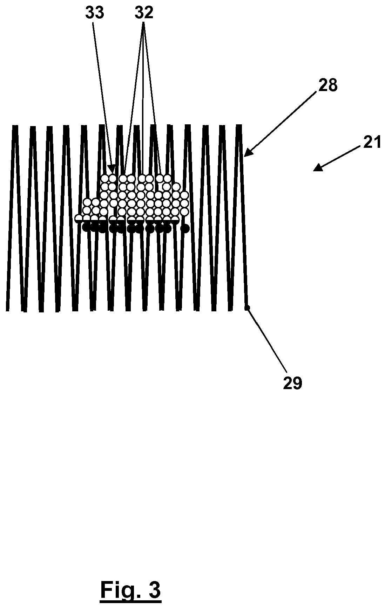

Such an image is depicted in **Fig. 3****.** The structure 33 of interest becomes apparent by the sum of the individual locations 32 over a plurality of repetitions of scanning the scanning range 28. Such an image may in this way also be recorded, if the fluorescent dye by which the structure 33 is marked is highly susceptible to bleaching due to combined effects of the light intensities of the stimulation light beam 7 and the fluorescence excitation light beam 4 to which it is subjected prior to getting into the measurement area around the focal point 29. In that the scanning conditions are selected here such that during each scanning of the scanning range 28 only individual photons of fluorescence light are detected, not only the probability of the emission of fluorescence light but also the probability of bleaching the fluorescent dye is low during each scanning of the scanning range 28. Any bleaching of the fluorescent dye occurring takes place over many repetitions of scanning the scanning range 28 and is thus evenly distributed over the entire scanning range 28. As a result, photons will be detected from all molecules of the fluorescent dye distributed over the entire scanning range 28 at a high probability prior to completely bleaching the fluorescent dye. In contrast, in common STED scanning fluorescence light microscopy in which at each location of the focal point 29 as much fluorescence light as possible is registered, a sensitive fluorescent dye may already be completely bleached by the preceding light intensities before it is reached by the actual measurement area.

### LIST OF REFERENCE NUMERALS

- 1: apparatus
- 2: STED scanning fluorescence light microscope
- 3: fluorescence excitation light source
- 4: fluorescence excitation light beam
- 5: acousto-optically adjustable filter
- 6: stimulation light source
- 7: stimulation light beam
- 8: optic
- 9: mirror
- 10: dichroic beam splitter
- 11: wave front modulator
- 12: mirror
- 13: electro-optical deflector
- 14: optic
- 15: mirror
- 16: mirror with bandpass filter
- 17: mirror
- 18: objective lens
- 19: galvanometer
- 20: phase plate
- 21: sample
- 22: fluorescence light
- 23: detector
- 24: mirror
- 25: mirror
- 26: optic
- 27: slit diaphragm
- 28: scanning range
- 29: focal point
- 30: line direction
- 31: line feed direction
- 32: location
- 33: structure
- 34: electro-optical modulator

## Claims

1. A method of imaging a structure (33) marked with a fluorescent dye in a sample (21), comprising
- repeatedly scanning the sample (21) in a scanning range (28) with a light intensity distribution localised around a focal point (29) of a focused fluorescence excitation light beam (4) of fluorescence excitation light, wherein the light intensity distribution further comprises a focused fluorescence inhibiting light beam of fluorescence inhibiting light whose wave fronts are modulated such that a fluorescence inhibiting light intensity distribution comprises a minimum at the focal point (29) of the fluorescence excitation light beam (4);
- detecting fluorescence light (22) emitted out of the scanning range (28); and
- allocating the detected fluorescence light (22) to the actual location (32) of the focal point (29) in the sample (21);
**characterised in**
- **that** scanning conditions which, besides a scanning speed at which the focal point (29) is shifted with regard to the sample (21) and light intensities of the light intensity distribution, include properties and a concentration of the fluorescent dye in the scanning range (28) are coordinated in such a way that the fluorescence light (22) is emitted out of the scanning range (28) as temporarily separated and individually detectable photons; and
- **that** an image of the structure (33) is composed of locations (32) which have been allocated to the detected photons during several repetitions of scanning the scanning range.

2. The method of any of the preceding claims, wherein the light intensity of the focused fluorescence excitation light beam (4) is reduced for coordinating the scanning conditions.

3. The method of any of the preceding claims, wherein the light intensity of the focused fluorescence excitation light beam (4) is high frequently modulated for coordinating the scanning conditions.

4. The method of any of the preceding claims, wherein the scanning speed is increased for coordinating the scanning conditions.

5. The method of any of the preceding claims, wherein, in coordinating the scanning conditions, the scanning speed is set so high that a pixel dwell time of not more than 10 ns, preferably of not more than 7 ns is achieved.

6. The method of any of the preceding claims, wherein an image of the structure (33) is composed of locations (32) which have been allocated to the individual photons during at least 3, preferably at least 20, more preferably at least 100 and most preferably at least 1000 succeeding repetitions of scanning the scanning range (28).

7. The method of any of the preceding claims, wherein several temporarily succeeding images of the structure (33) are composed of locations (32) which have been allocated to the individual photons during a plurality of succeeding repetitions of scanning the scanning range (28).

8. An apparatus (1) for executing the method according to any of the preceding claims, the apparatus comprising
- a fluorescence excitation light source (3) configured to provide a fluorescence excitation light beam (4) of fluorescence excitation light;
- a fluorescence inhibiting light source configured to provide a fluorescence inhibiting light beam of fluorescence inhibiting light whose wave fronts are modulated;
- an objective lens (18) configured to focus the fluorescence excitation light beam (4) and the fluorescence inhibiting light beam;
- a raster scanner configured to repeatedly scan a scanning range (28) with a light intensity distribution which is localised around a focal point (29) of the focused fluorescence excitation light beam (4) and which further comprises a fluorescence inhibiting light intensity distribution comprising a minimum at the focal point (29) of the fluorescence excitation light beam (4);
- a detector (23) configured to detect fluorescence light (22) emitted out of the scanning range (28); and
- an evaluation unit configured to allocate the fluorescence light to the actual location of the focal point (29) in the sample (21),
**characterised in**
- **that** the apparatus further comprises a controller configured to coordinate scanning conditions which, besides a scanning speed at which the focal point (29) is shifted with regard to the sample and light intensities of the light intensity distribution, include properties and a concentration of the fluorescent dye in the scanning range (28) such that the fluorescence light (22) is emitted out of the scanning range (28) as temporarily separated individual and individually detectable photons; and
- **that** the evaluation unit is configured to compose an image of the structure (23) of locations (32) which have been allocated to the detected photons during several repetitions of scanning the scanning range (28).

9. The apparatus (1) of claim 8, wherein the fluorescence excitation light source (3) and the fluorescence inhibiting light source each comprise a continuous wave laser or a high frequently pulsed laser.

10. The apparatus (1) of any of the preceding claims 8 to 9, wherein the raster scanner comprises an electro-optical deflector.

11. The apparatus (1) of any of the preceding claims 8 to 10, wherein the detector (23) is a point detector.

12. The apparatus (1) of any of the preceding claims 8 to 11, wherein the detector (23) is a hybrid detector.

13. The apparatus (1) of any of the preceding claims 8 to 12, wherein the evaluation unit is configured to compose a plurality of temporarily succeeding images of the structure (23) of the locations (32) which have been allocated to the individual photons during a plurality of succeeding repetitions of scanning the scanning range (28).

## Patentansprüche

1. Verfahren zum Abbilden einer mit einem Fluoreszenzfarbstoff markierten Struktur (33) in einer Probe (21), mit
- wiederholtem Abtasten der Probe (21) in einem Abtastbereich (28) mit einer Lichtintensitätsverteilung um einen Fokuspunkt (29) eines fokussierten Fluoreszenzanregungslichtstrahls (4) aus Fluoreszenzanregungslicht, wobei die Lichtintensitätsverteilung weiterhin einen fokussierten Fluoreszenzverhinderungslichtstrahl aus Fluoreszenzverhinderungslicht aufweist, dessen Wellenfronten derart moduliert sind, dass eine Fluoreszenzverhinderungslichtintensitätsverteilung ein Minimum an dem Fokuspunkt (29) des Fluoreszenzanregungslichtstrahls (4) aufweist;
- Detektieren von aus dem Abtastbereich (28) emittiertem Fluoreszenzlicht (22); und
- Zuordnen des detektierten Fluoreszenzlichts (22) zu dem tatsächlichen Ort (32) des Fokuspunkts (29) in der Probe (21);
**dadurch gekennzeichnet,**
- **dass** Abtastbedingungen, die neben einer Abtastgeschwindigkeit, mit der der Fokuspunkt (29) bezüglich der Probe (21) verschoben wird, und Lichtintensitäten der Lichtintensitätsverteilung Eigenschaften und eine Konzentration des Fluoreszenzfarbstoffs in dem Abtastbereich (28) umfassen, derart koordiniert werden, dass das Fluoreszenzlicht (22) aus dem Abtastbereich (28) als zeitlich getrennte und einzeln detektierbare Photonen emittiert wird; und
- **dass** ein Bild der Struktur (33) aus den Orten (32) zusammengesetzt wird, die den detektierten Photonen während einiger Wiederholungen des Abtastens des Abtastbereichs zugeordnet wurden.

2. Verfahren nach einem der vorhergehenden Ansprüche, wobei die Lichtintensität des fokussierten Fluoreszenzanregungslichtstrahls (4) zum Koordinieren der Abtastbedingungen reduziert wird.

3. Verfahren nach einem der vorhergehenden Ansprüche, wobei die Lichtintensität des fokussierten Fluoreszenzanregungslichtstrahls (4) zum Koordinieren der Abtastbedingungen hochfrequent moduliert wird.

4. Verfahren nach einem der vorhergehenden Ansprüche, wobei die Abtastgeschwindigkeit zum Koordinieren der Abtastbedingungen erhöht wird.

5. Verfahren nach einem der vorhergehenden Ansprüche, wobei, beim Koordinieren der Abtastbedingungen, die Abtastgeschwindigkeit so hoch gesetzt wird, dass eine Pixelverweilzeit von nicht mehr als 10 ns, vorzugsweise von nicht mehr als 7 ns, erreicht wird.

6. Verfahren nach einem der vorhergehenden Ansprüche, wobei ein Bild der Struktur (33) aus Orten (32) zusammengesetzt wird, die den einzelnen Photonen während mindestens 3, vorzugsweise mindestens 20, mehr bevorzugt mindestens 100 und am meisten bevorzugt mindestens 1.000 aufeinanderfolgenden Wiederholungen des Abtastens des Abtastbereichs (28) zugeordnet wurden.

7. Verfahren nach einem der vorhergehenden Ansprüche, wobei einige zeitlich aufeinanderfolgende Bilder der Struktur (33) aus Orten (32) zusammengesetzt werden, die den einzelnen Photonen während einer Vielzahl von aufeinanderfolgenden Wiederholungen des Abtastens des Abtastbereichs (28) zugeordnet wurden.

8. Vorrichtung (1) zum Durchführen des Verfahrens nach einem der vorhergehenden Ansprüche, wobei die Vorrichtung aufweist
- eine Fluoreszenzanregungslichtquelle (3), die konfiguriert ist, um einen Fluoreszenzanregungslichtstrahl (4) aus Fluoreszenzanregungslicht bereitzustellen;
- eine Fluoreszenzverhinderungslichtquelle, die konfiguriert ist, um einen Fluoreszenzverhinderungslichtstrahl aus Fluoreszenzverhinderungslicht bereitzustellen, dessen Wellenfronten moduliert sind;
- ein Objektiv (18), das konfiguriert ist, um den Fluoreszenzanregungslichtstrahl (4) und den Fluoreszenzverhinderungslichtstrahl zu fokussieren;
- einen Rasterscanner, der konfiguriert ist, um wiederholt einen Abtastbereich (28) mit einer Lichtintensitätsverteilung abzutasten, die um einen Fokuspunkt (29) des fokussierten Fluoreszenzanregungslichtstrahls (4) angeordnet ist und weiterhin eine Fluoreszenzverhinderungslichtintensitätsverteilung mit einem Minimum am Fokuspunkt (29) des Fluoreszenzanregungslichtstrahls (4) aufweist;
- einen Detektor (23), der konfiguriert ist, um aus dem Abtastbereich (28) emittiertes Fluoreszenzlicht (22) zu detektieren; und
- eine Auswerteeinheit, die konfiguriert ist, um das Fluoreszenzlicht dem tatsächlichen Ort des Fokuspunkts (29) in der Probe (21) zuzuordnen,
**dadurch gekennzeichnet,**
- **dass** die Vorrichtung weiterhin eine Steuerung aufweist, die konfiguriert ist, um Abtastbedingungen, welche neben einer Abtastgeschwindigkeit, mit der der Fokuspunkt (29) bezüglich der Probe verschoben wird, und Lichtintensitäten der Lichtintensitätsverteilung Eigenschaften und eine Konzentration des Fluoreszenzfarbstoffs in dem Abtastbereich (28) umfassen, derart zu koordinieren, dass das Fluoreszenzlicht (22) aus dem Abtastbereich (28) als zeitlich getrennte einzelne und einzeln detektierbare Photonen emittiert wird; und
- **dass** die Auswerteeinheit konfiguriert ist, um ein Bild der Struktur (23) aus Orten (32) zusammenzusetzen, die den detektierten Photonen während einigen Wiederholungen des Abtastens des Abtastbereichs (28) zugeordnet wurden.

9. Vorrichtung (1) nach Anspruch 8, wobei die Fluoreszenzanregungslichtquelle (3) und die Fluoreszenzverhinderungslichtquelle jeweils einen Dauerstrichlaser oder einen hochfrequent gepulsten Laser aufweisen.

10. Vorrichtung (1) nach einem der vorhergehenden Ansprüche 8 bis 9, wobei der Rasterscanner einen elektro-optischen Deflektor aufweist.

11. Vorrichtung (1) nach einem der vorhergehenden Ansprüche 8 bis 10, wobei der Detektor (23) ein Punktdetektor ist.

12. Vorrichtung (1) nach einem der vorhergehenden Ansprüche 8 bis 11, wobei der Detektor (23) ein Hybriddetektor ist.

13. Vorrichtung (1) nach einem der vorhergehenden Ansprüche 8 bis 12, wobei die Auswerteeinheit konfiguriert ist, um eine Mehrzahl von zeitlich aufeinanderfolgenden Bildern der Struktur (23) aus den Orten (32) zusammenzusetzen, die den einzelnen Photonen während einer Vielzahl von aufeinanderfolgenden Wiederholungen des Abtastens des Abtastbereichs (28) zugeordnet wurden.

## Revendications

1. Procédé d'imagerie d'une structure (33) marquée avec un colorant fluorescent dans un échantillon (21), comprenant les étapes ci-dessous consistant à :
- balayer de manière répétée l'échantillon (21) dans une plage de balayage (28) avec une répartition d'intensité lumineuse localisée autour d'un point focal (29) d'un faisceau lumineux d'excitation de fluorescence focalisé (4) d'une lumière d'excitation de fluorescence, dans lequel la répartition d'intensité lumineuse comprend en outre un faisceau lumineux d'inhibition de fluorescence focalisé d'une lumière d'inhibition de fluorescence dont les fronts d'onde sont modulés de sorte qu'une répartition d'intensité lumineuse d'inhibition de fluorescence comprend un minium au niveau du point focal (29) du faisceau lumineux d'excitation de fluorescence (4) ;
- détecter une lumière de fluorescence (22) émise en dehors de la plage de balayage (28) ; et
- affecter la lumière de fluorescence détectée (22) à l'emplacement réel (32) du point focal (29) dans l'échantillon (21) ;
**caractérisé en ce que** :
- des conditions de balayage qui, outre une vitesse de balayage à laquelle le point focal (29) est déplacé par rapport à l'échantillon (21) et des intensités lumineuses de la répartition d'intensité lumineuse, incluent des propriétés et une concentration du colorant fluorescent dans la plage de balayage (28), sont coordonnées de telle sorte que la lumière de fluorescence (22) est émise en dehors de la plage de balayage (28) sous la forme de photons temporairement séparés et détectables individuellement ; et
- une image de la structure (33) est composée d'emplacements (32) qui ont été affectés aux photons détectés pendant plusieurs répétitions de balayage de la plage de balayage.

2. Procédé selon l'une des revendications précédentes, dans lequel l'intensité lumineuse du faisceau lumineux d'excitation de fluorescence focalisé (4) est réduite en vue de coordonner les conditions de balayage.

3. Procédé selon l'une quelconque des revendications précédentes, dans lequel l'intensité lumineuse du faisceau lumineux d'excitation de fluorescence focalisé (4) est modulée à haute fréquence en vue de coordonner les conditions de balayage.

4. Procédé selon l'une quelconque des revendications précédentes, dans lequel la vitesse de balayage est augmentée en vue de coordonner les conditions de balayage.

5. Procédé selon l'une quelconque des revendications précédentes, dans lequel, dans le cadre de la coordination des conditions de balayage, la vitesse de balayage est réglée sur une valeur si élevée qu'un temps de séjour de pixels non supérieur à 10 ns, de préférence non supérieur à 7 ns, est atteint.

6. Procédé selon l'une quelconque des revendications précédentes, dans lequel une image de la structure (33) est composée d'emplacements (32) qui ont été affectés aux photons individuels pendant au moins 3, de préférence au moins 20, plus préférablement au moins 100, et plus préférablement encore au moins 1 000, répétitions successives de balayage de la plage de balayage (28).

7. Procédé selon l'une quelconque des revendications précédentes, dans lequel plusieurs images successives temporaires de la structure (33) sont composées d'emplacements (32) qui ont été affectés aux photons individuels pendant une pluralité de répétitions successives de balayage de la plage de balayage (28).

8. Appareil (1) destiné à exécuter le procédé selon l'une quelconque des revendications précédentes, l'appareil comprenant :
- une source lumineuse d'excitation de fluorescence (3) configurée de manière à fournir un faisceau lumineux d'excitation de fluorescence (4) d'une lumière d'excitation de fluorescence ;
- une source lumineuse d'inhibition de fluorescence configurée de manière à fournir un faisceau lumineux d'inhibition de fluorescence d'une lumière d'inhibition de fluorescence dont les fronts d'onde sont modulés ;
- une lentille de focalisation (18) configurée de manière à focaliser le faisceau lumineux d'excitation de fluorescence (4) et le faisceau lumineux d'inhibition de fluorescence ;
- un dispositif à balayage de trame configuré de manière à balayer de façon répétée une plage de balayage (28) avec une répartition d'intensité lumineuse qui est localisée autour d'un point focal (29) du faisceau lumineux d'excitation de fluorescence focalisé (4) et qui comprend en outre une répartition d'intensité de lumière d'inhibition de fluorescence comprenant un minimum au niveau du point focal (29) du faisceau lumineux d'excitation de fluorescence (4) ;
- un détecteur (23) configuré de manière à détecter une lumière de fluorescence (22) émise en dehors de la plage de balayage (28) ; et
- une unité d'évaluation configurée de manière à affecter la lumière de fluorescence à l'emplacement réel du point focal (29) dans l'échantillon (21) ;
**caractérisé en ce que** :
- l'appareil comprend en outre un contrôleur configuré de manière à coordonner des conditions de balayage qui, outre une vitesse de balayage à laquelle le point focal (29) est déplacé par rapport à l'échantillon, et des intensités lumineuses de la répartition d'intensité lumineuse, incluent des propriétés et une concentration du colorant fluorescent dans la plage de balayage (28) de sorte que la lumière de fluorescence (22) est émise en dehors de la plage de balayage (28) sous la forme de photons temporairement séparés et détectables individuellement ; et
- l'unité d'évaluation est configurée de manière à composer une image de la structure (23) d'emplacements (32) qui ont été affectés aux photons détectés pendant plusieurs répétitions de balayage de la plage de balayage (28).

9. Appareil (1) selon la revendication 8, dans lequel la source lumineuse d'excitation de fluorescence (3) et la source d'inhibition de fluorescence comprennent chacune un laser à ondes entretenues ou un laser à impulsions haute fréquence.

10. Appareil (1) selon l'une quelconque des revendications 8 à 9, dans lequel le dispositif à balayage de trame comprend un déflecteur électro-optique.

11. Appareil (1) selon l'une quelconque des revendications 8 à 10, dans lequel le détecteur (23) est un détecteur de point.

12. Appareil (1) selon l'une quelconque des revendications 8 à 11, dans lequel le détecteur (23) est un détecteur hybride.

13. Appareil (1) selon l'une quelconque des revendications 8 à 12, dans lequel l'unité d'évaluation est configurée de manière à composer une pluralité d'images successives temporaires de la structure (23) des emplacements (32) qui ont été affectés aux photons individuels pendant une pluralité de répétitions successives de balayage de la plage de balayage (28).
